# EUROPÄISCHE PATENTANMELDUNG

(11) **EP 1 223 446 A1**
(43) Veröffentlichungstag der Anmeldung: **17.07.2002**
(21) Anmeldenummer: 01100805.9
(22) Anmeldetag: 15.01.2001
(51) Int. Cl.: G02B 6/44, F16L 7/00, H02G 1/08

(54) **Verfahren zum Verlegen von Datenübertragungskabeln in Rohrleitungssystemen**

(71) Anmelder: KA-TE System AG, 8807 Freienbach (CH); Hecht, Reinhard, 93047 Regensburg (DE); Manstorfer, Karl, 93047 Regensburg (DE)
(72) Erfinder: Tresch, Rudolf, 5703 Seon (CH); Hecht, Reinhard, 93167 Falkenstein (DE); Manstorfer, Karl, 93309 Kelheim (DE); Bunschi, Hans, Dr., 8753 Mollis (CH); Weingarten, Marco, 8807 Freienbach (CH)
(74) Vertreter: Patentanwälte Schaad, Balass, Menzl & Partner AG

(57) **Zusammenfassung**

Das Datenleitungskabel (32), insbesondere ein Lichtwellenleiterkabel, wird im Hauptrohr (10) entlang der Rohrinnenwand (22) wenigstens annähernd geradlinig und tangential an die Verbindungskante (30) vom Hauptrohr (10) mit einem Nebenrohr (12) herangeführt. Im Nebenrohr (12) wird das Datenleitungskabel (32) schraubenlinienförmig verlegt, was ein knickfreies Verlegen des Datenleitungskabels (32) ohne die Verwendung von Knickschutzelementen ermöglicht.

## Beschreibung

Die vorliegende Erfindung betrifft ein Verfahren zum Verlegen von Datenleitungskabeln, insbesondere Lichtwellenleiterkabeln, in Rohrleitungssystemen, gemäss dem Patentanspruch 1, einen Rohrleitungsroboter gemäss Patentanspruch 10 und ein Abdeckelement nach Patentanspruch 11.

Insbesondere beim Verlegen von als Datenleitungskabeln dienenden Lichtwellenleiterkabeln ist darauf zu achten, dass ein minimaler zulässiger Biegeradius nicht unterschritten wird. Um dies beim Verlegen von Lichtwellenleiterkabeln in Abwassserrohrleitungssystemen im Übergangsbereich zwischen einem Vertikalschacht und einer in diesen einmündenden Rohrleitung zu gewährleisten, werden in der EP-A-1 008 881 und in der DE-U-298 02 655 die Verwendung von Knickschutzvorrichtungen empfohlen. Diese, eine im wesentlichen Halbtropfenform aufweisenden Knickschutzvorrichtungen werden an die Wand des Schachtes montiert, derart, dass sie einerends mit der Innenwand der Rohrleitung fluchtet und andernends zur Wand des Schachtes hin ausläuft.

Es ist eine Aufgabe der vorliegenden Erfindung, ein Verfahren zum Verlegen von Datenleitungskabeln, insbesondere Lichtwellenleiterkabeln, in Rohrleitungssystemen zu schaffen, welches bei Abzweigungen ohne Knickschutzvorrichtungen auskommt.

Diese Aufgabe wird mit einem Verfahren gelöst, das die Merkmale des Patentanspruchs 1 aufweist.

Durch das wenigstens annähernd tangentiale Heranführen des Datenleitungskabels im Hauptrohr an die Verbindungskante zwischen diesem und einem abzweigenden Nebenrohr und das schraubenlinienförmige Führen des Datenleitungskabels im Nebenrohr erlauben eine knickfreie Montage des Datenleitungskabels, auch im Übergangsbereich zwischen Hauptrohr und Nebenrohr. Dies ist von besonderem Vorteil, wenn das Datenleitungskabel in einem nicht begehbaren Rohrleitungssystem, unter Zuhilfenahme von rohrgängigen Robotern, zu montieren ist.

Bevorzugte Ausbildungsformen des erfindungsgemässen Verfahrens sind in abhängigen Patentansprüchen angegeben.

Weitere Vorteile des erfindungsgemässen Verfahrens gemäss dem unabhängigen Patentanspruch und den abhängigen Patentansprüchen ergeben sich aus den Figurenbeschreibungen und der Zeichnung.

Ein für die Durchführung des Verfahrens geeigneter Rohrleitungsroboter ist im Patentanspruch 10 und ein geeignetes Abdeckelement im Patentanspruch 11 angegeben.

Die Erfindung wird anhand in der Zeichnung dargestellten Ausführungsbeispielen näher erläutert. Es zeigen rein schematisch:
- Fig. 1: perspektivisch und geschnitten ein Hauptrohr, ein von diesem abzweigendes Nebenrohr, im Hauptrohr verlegten Röhrchen für Lichtwellenleiterkabel und einem Lichtwellenleiterkabel, das gemäss der Erfindung vom Hauptrohr ins Nebenrohr führend verlegt ist;
- Fig. 2: in gleicher Darstellung wie Fig. 1 das verlegte Datenleitungskabel, wobei eine Röhrchenlücke zum Wegführen des Datenleitungskabels aus dem zugeordneten Röhrchen von einem Abdeckelement überdeckt ist;
- Fig. 3: in einem Querschnitt das Röhrchen und das dieses umfassende Abdeckelement;
- Fig. 4: das Abdeckelement in einem Längsschnitt;
- Fig. 5: in gleicher Darstellung wie Fig. 1 und 2 einen Rohrleitungsroboter im Nebenrohr zum schraubenlinienförmigen Verlegen und Befestigen des Datenleitungskabels im Nebenrohr;
- Fig. 6: in perspektivischer Darstellung und gegenüber Fig. 5 vergrössert, der dort gezeigte Rohrleitungsroboter;
- Fig. 7: in perspektivischer Darstellung ein aufgeschnitten gezeigtes Rohr, mit einer rohrgängigen Vorrichtung zum Befestigen des Datenleitungskabels mittels Klebband an der Rohrinnenwand;
- Fig. 8: in perspektivischer Darstellung eine am Datenleitungskabel befestigte, zu einem Ring geschlossene und lösbar verriegelte Bride, zum Befestigen des Datenleitungskabels in einem Rohr;
- Fig. 9: in perspektivischer Darstellung ein aufgeschnitten gezeigtes Rohr mit einem darin eingezogenen Datenleitungskabel, mit Briden in verriegeltem und entriegeltem Zustand;
- Fig. 10: einen Querschnitt durch das in der Fig. 9 gezeigte Rohr mit einer Bride in verriegeltem und entriegeltem Zustand;
- Fig. 11: im Querschnitt einen auf ein Band aufgesetzten Kanal mit Schliesslippen zum Einführen des Datenleitungskabels;
- Fig. 12: im Querschnitt ein Band mit zwei integrierten, unterschiedlich ausgebildeten Kanälen mit Schliesslippen zum Einführen des Datenleitungskabels;
- Fig. 13: einen in ein Band integrierter Kanalverbund mit Schliesslippen zum Einführen von Datenleitungskabeln;
- Fig. 14: in perspektivischer Darstellung und vereinfacht eine Vorrichtung zum Einführen eines Datenleitungskabels in einen Kanal gemäss den Fig. 11 bis 13; und
- Fig. 15: ein an ein rohrgängiges Roboterfahrzeug angebautes Werkzeug zum Ausschneiden eines Abschnitts aus einem in einem Rohr verlegten Röhrchen.

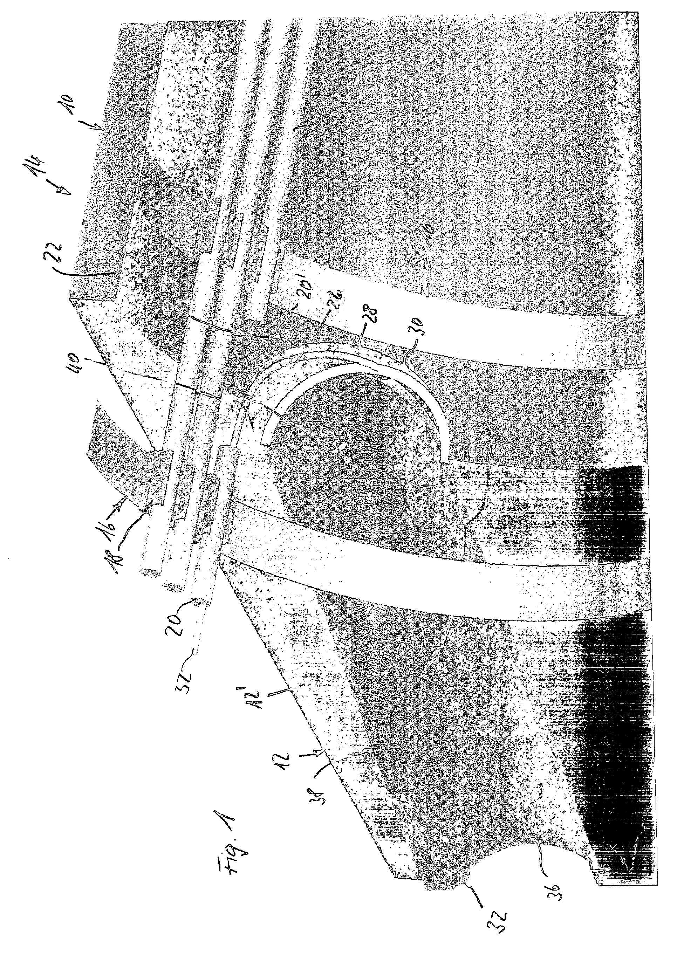

Fig. 1 zeigt ein geradliniges Hauptrohr 10 und ein von diesem in einem etwa rechten Winkel abzweigendes, im lichten Querschnitt kleineres Nebenrohr 12 eines Abwasserrohrleitungssystems 14. Das Hauptrohr 10 und das Nebenrohr 12 sind in in axialer Richtung verlaufenden Längsschnitten gezeigt. Beim Hauptrohr 10 handelt es sich um eine nicht begehbare Verbindungsleitung zwischen zwei Vertikalschächten und beim Nebenrohr 12 um eine Hausanschlussleitung, die dazu dient, die häuslichen Abwässer in das Hauptrohr 12 zu leiten.

In das Hauptrohr 10 sind unter Zuhilfenahme eines kanalgängigen Roboters ringförmige Innenbriden 16 eingesetzt, wobei sich je eine der Innenbriden 16 auf beiden Seiten der Abzweigung des Nebenrohres 12 in einem geringen Abstand von beispielsweise einigen Zentimetern, von diesem befinden. In jeweils drei benachbarte, an jeder Innenbride 16 angeordneten Clips 18 sind ebenfalls mittels eines rohrgängigen Roboterfahrzeugs Röhrchen 20, es handelt sich dabei um bekannte, biegbare Schutzrohre aus Edelstahl, eingesetzt.

Besonders geeignete Innenbriden 16 sind in der EP-A-0 936 479 und WO-A-99/42865 offenbart. Rohrgängige Roboter zum Versetzen der Innenbriden 16 sind aus der EP-A-0 936 478 und der WO-A-00/08506 bekannt. Roboter zum Montieren der Röhrchen 20 in die an den Innenbriden 16 angeordneten Clips 18 sind in der EP-A-0 936 713 und in der WO-A-99/43063 offenbart.

Die Röhrchen 20 sind in Längsrichtung des Hauptrohres 10 im oberen Bereich, auf der dem Nebenrohr 12 zugewandten Seite, entlang der Rohrinnenwand 22 - im gezeigten Rohrabschnitt geradlinig - verlegt und zwar derart, dass das unterste der drei Röhrchen 22 wenigstens annähernd in einer Ebene verläuft, die einerseits parallel zur oder durch die Längsachse 20' des betreffenden Röhrchens 20 und die Firstlinie 26 der Innenwand 28 des Nebenrohres 12 definiert ist. Die Verbindungskante 30 zwischen der Rohrinnenwand 22 des Hauptrohres 10 und der Innenwand 28 des Nebenrohrs 12 ist mit 30 bezeichnet. Sie kann scharfkantig, in bevorzugter Weise jedoch abgerundet sein.

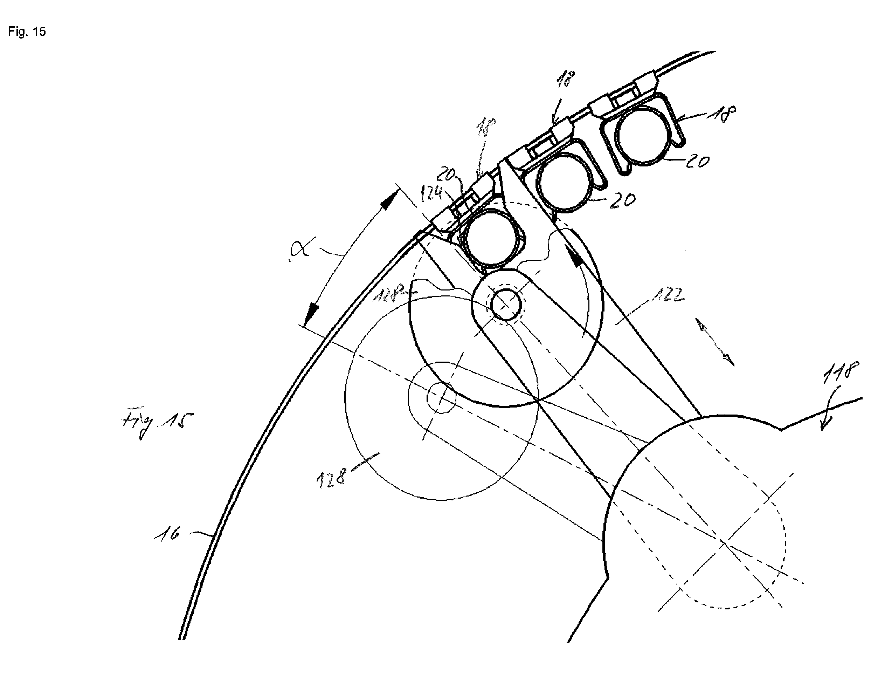

Nachdem die Röhrchen 20 im Hauptrohr 10 verlegt sind, wird das unterste Röhrchen 20 - d.h. jenes, in welches ein Datenleitungskabel 32 einzuziehen sein wird, das in das Nebenrohr 12 zu führen ist - ein Röhrchenabschnitt herausgetrennt, wodurch eine Röhrchenlücke 34 entsteht. Diese befindet sich zwischen den beiden der Abzweigung benachbarten Innenbriden 16 und annähernd symmetrisch zu einer vertikalen Längsmittelebene des Nebenrohres 12. Das Ausschneiden des Röhrchens Abschnitts aus dem Röhrchen 20 kann beispielsweise mittels eines an einem Roboterfahrzeug angeordneten Schneidwerkzeugs erfolgen, welches in der Fig. 15 gezeigt ist.

Bevor ein allgemein bekannter Liner 36 - auch Inliner genannt - als Innenauskleidung in das Nebenrohr 12 eingeführt wird, wird das Datenleitungskabel 32 eingezogen und verlegt. Das Einziehen des Datenleitungskabels 32 kann beispielsweise dadurch erfolgen, dass zuerst eine erste Zugleine vom freien Ende des Nebenrohres 12 her in dieses und in das Hauptrohr 10 eingeschwemmt wird, solange, bis das vorauslaufende Ende der ersten Zugleine am einen Ende des Hauptrohres 10, beispielsweise in einem Vertikalschacht angelangt ist. Anschliessend wird von diesem Vertikalschacht bzw. von diesem Ende des Hauptrohres 10 her eine zweite Zugleine in das aufgeschnittene Röhrchen 20 eingeschoben oder eingeschossen, bis das vorauslaufende Ende dieser zweiten Zugleine bei der Röhrchenlücke 34 das Röhrchen 20 verlassen hat. Durch Weiterschieben und Ausschwemmen kann das vorlaufende Ende der zweiten Zugleine zum Ende des Hauptrohres 10 bzw. Vertikalschacht zurückgebracht werden. Selbstverständlich ist es auch denkbar, die zweite Zugleine mittels eines Roboters oder einer Zugeinrichtung mit Fanghacken durch das Hauptrohr 10 zurückzubringen. Die beiden Zugleinen werden dann miteinander verbunden und durch Zurückziehen an der zweiten Zugleine wird auch die erste Zugleine zuerst durch das Hauptrohr 10 zurück und dann durch das Röhrchen 20 zum Ende des Hauptrohres 10 bzw. den Vertikalschacht gezogen. Die erste Zugleine verläuft dann vom hausseitigen Ende des Nebenrohres 12 durch dieses bis zum Hauptrohr 10 und anschliessend durch das Röhrchen 20 zum Ende des Hauptrohres 10 bzw. zum Vertikalschacht. Mittels der ersten Zugleine wird nun das Datenleitungskabel 32 in das Röhrchen 20 und das Nebenrohr 12 eingezogen, wobei durch gleichzeitiges Stossen am Datenleitungskabel 32 sichergestellt wird, dass das Datenleitungskabel 32 nicht geknickt wird.

Anschliessend wird das Datenleitungskabel 32 mittels eines Rohrleitungsroboters mindestens in einem an die Verbindungskante 30 und somit der Abzweigung anschliessenden Endbereich 12' des Nebenrohres 12 schraubenlinienförmig entlang der Innenwand 28 verlegt und an dieser befestigt. Zum Befestigen können alle geeigneten Befestigungsmittel 38, wie Klebstoff, Klebstreifen, Briden usw. verwendet werden.

Durch das wenigstens annähernd tangentiale Heranführen des Datenleitungskabels 32 im Hauptrohr 10 an die Verbindungskante 30 und das schraubenlinienförmige Führen des Datenleitungskabels 32 im Nebenrohr 12 bewirkt, dass das Datenleitungskabel 32 knickfrei von einem geradlinigen Abschnitt in einen helixartigen Abschnitt übergeht und dabei in einem Übergangsbereich 40 entlang eines in Umfangsrichtung verlaufenden Abschnitts 30' der Verbindungskante 30 sanft um die Verbindungskante 30 herumgeführt wird.

Das spiralförmige Verlegen des Datenleitungskabels 32 im Nebenrohr 12 führt weiter zu einer Kabelreserve für enge Kurvenbereiche, wo das Datenleitungskabel 32 evtl. nicht fixiert werden kann. In diesen Bereichen wird das Datenleitungskabel 32 dann ausschliesslich durch den Inliner 36 gehalten, der in bekannter Art und Weise ausgebildet und in das Nebenrohr 12 eingebracht wird, derart, dass er hauptrohrseitig 10 in einem geringfügigen Abstand, von beispielsweise einigen wenigen Zentimetern, zur Verbindungskante 30 endet. Der Liner 36 wird beispielsweise mittels eines Luftschlauches an die Innenwand 28 angelegt und gegen diese gedrückt gehalten, bis das Harz des Liners 36 mindestens teilausgehärtet ist. Danach wird der Luftschlauch entfernt. Das Datenleitungskabel ist dann im gesamten Bereich des Liners 36 zwischen diesem und der Innenwand 28 geschützt festgehalten.

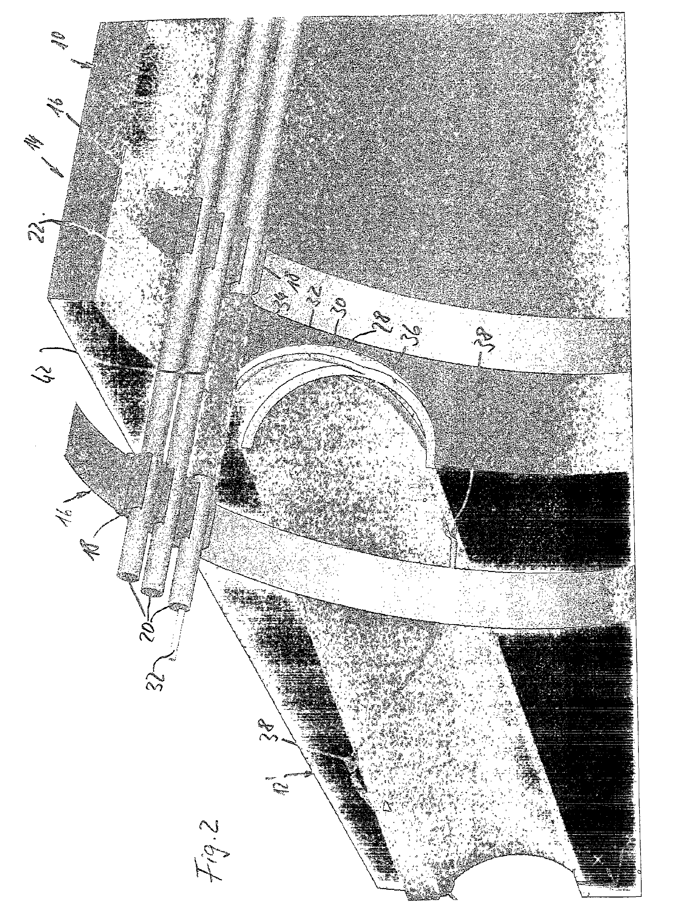

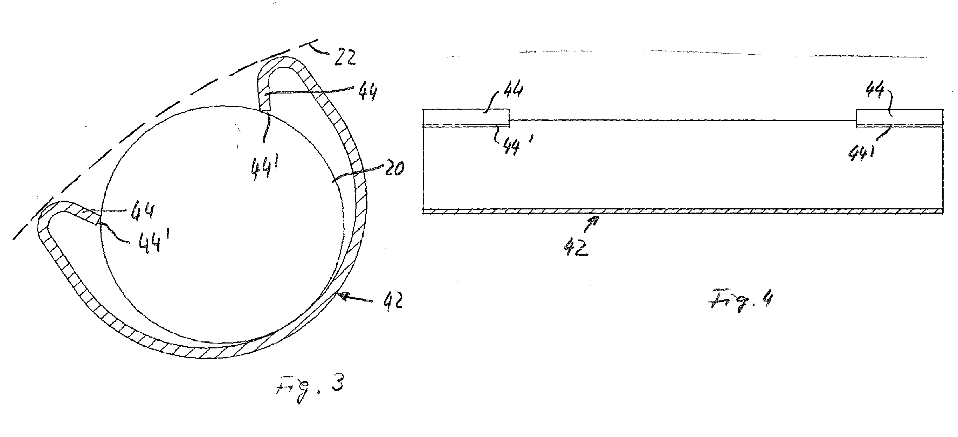

Wie der Fig. 2 entnehmbar ist, wird die Röhrchenlücke 34 nach dem Verlegen des Datenleitungskabels 32, mittels eines Abdeckelements 42 überbrückt. Die mögliche Ausbildungsform eines Abdeckelements 42 ist in den Fig. 3 und 4 gezeigt. Es besteht beispielsweise aus einem rechteckförmigen Edelstahlblechausschnitt, der an die Ecken angrenzend einander gegenüberliegende, vorstehende Endlappen 44 aufweist. Der rechteckförmige Edelstahlblechabschnitt ist zu einem im Querschnitt U-förmigen kanalartigen Teil geformt, wobei der Biegeradius des Abdeckelements 42 mindestens gleich, vorzugsweise grösser ist als der Radius der Röhrchen 20. Die Endlappen 44 sind in Richtung gegen den vom Abdeckelement 42 begrenzten Innenraum umgebogen. In Längsrichtung gemessen, ist das Abdeckelement 42 länger als die Röhrchenlücke 34, jedoch kürzer als der Abstand der beiden beidseitig der Abzweigung des Nebenrohres 12 angeordneten Innenbriden 16 im Hauptrohr 10. Für die Montage des Abdeckelements 42 kann beispielsweise ein Rohrleitungs- oder Kanalroboter bekannter Art verwendet werden, der ein um die Längsachse drehbares und in radialer Richtung ausfahrbares Aufnahmeelement für das Abdeckelement 42 aufweist. Durch das Ausfahren in radialer Richtung, kommen die Endlappen 44 an die an die Röhrchenlücke 34 angrenzenden Endbereiche des Röhrchens 20 zur Anlage, wodurch beim Weiterbewegen in radialer Richtung gegen aussen das Abdeckelement 42 vorerst aufgeweitet wird und sich dann infolge der Eigenelastizität wieder verengt, bis es einerseits mit seinem gebogenen Teil und andererseits mit den freien Enden 44' der Endlappen 44 am Röhrchen 20 anliegt. In der Fig. 3 ist die Rohrinnenwand 22 gestrichelt angedeutet, woraus erkennbar ist, dass die Röhrchenlücke 34 mittels des Abdeckelements 42 praktisch vollständig abgedeckt wird.

Falls erwünscht, kann der zwischen dem Abdeckelement 42 und dem Liner 36 allenfalls freiliegende Abschnitt des Datenleitungskabels 32 - vergleiche Fig. 2 - mit einer aushärtenden Masse überstrichen werden; dazu geeignete Roboter, beispielsweise Spachtelroboter, sind allgemein bekannt.

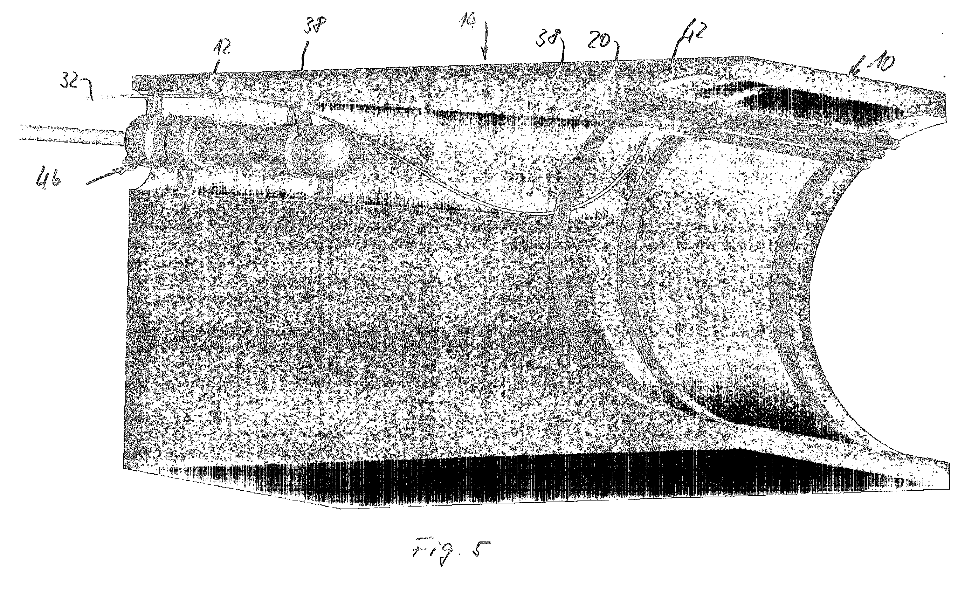

Fig. 5 zeigt in gleicher Darstellung wie Fig. 1 und 2 das Abwasserrohrleitungssystem 14 mit dem Hauptrohr 10 und dem Nebenrohr 12. Das Datenleitungskabel 32 ist eingezogen und die Röhrchenlücke 34 mittels eines Abdeckelements 42 überdeckt. Im Nebenrohr 12 befindet sich ein Rohrleitungsroboter 46, mittels welchem das Datenleitungskabel 32 im Nebenrohr 12 schraubenlinienförmig verlegt und in Abständen an der Innenwand 28 befestigt wird. Dieser Rohrleitungsroboter 46 ist in der Fig. 6 vergrössert dargestellt. Zum gezeigten Zeitpunkt der Montage des Datenleitungskabels 32 ist der Liner 36 noch nicht im Nebenrohr 12 verlegt.

Der kurvengängige Rohrleitungsroboter 46 - auch Molch genannt - ist gliederkettenartig aufgebaut und weist einen Fixierkopf 48, eine Kardangelenkverbindung 50, eine Feststelleinheit 52 sowie eine flexible Welle 54 mit Stahlsaiten 56 im Innern zur Steuerung des Fixierkopfes 48 und der Feststelleinheit 52 auf. Die Kardangelenkverbindung 50 verbindet die Feststelleinheit 52 mit dem Fixierkopf 48, welcher seinerseits auf der der Kardangelenkverbindung 50 abgewandten freien Endseite eine Öse 58 zum Befestigen eines Gegenzugseils aufweist. Mittels der flexiblen Welle 54 und gegebenenfalls des Gegenzugseils wird der Rohrleitungsroboter 46 im Nebenrohr 12 an die gewünschte Stelle und die gewünschte Drehrichtung verbracht. Der Fixierkopf 48 weist zweimal drei in radialer Richtung federnd ausgebildete Beine 60 auf. Die jeweils drei Beine 60 sind in einer rechtwinklig zur Längsrichtung verlaufenden Ebene angeordnet und in Umfangsrichtung gleichmässig verteilt, wobei die beiden Ebene in axialer Richtung gesehen voneinander beabstandet sind und in Längsrichtung gesehen sich die einer Ebene zugeordneten Beine 60 mittig zwischen den übrigen Beinen 60 befinden. Die Beine 60 weisen an ihren freien Enden je eine Kugelrolle 62 auf, die dazu bestimmt sind, an der Innenwand 28 des Nebenrohres 12 sich abzustützen und dadurch den Fixierkopf 48 im Nebenrohr 12 frei beweglich, jedoch zentrisch zu halten. Sollten sich die federnden Beine 60 in einem Einlauf oder Hindernis verhaken, können sie mittels einer der Stahlseiten 56 eingezogen werden, um den Fixierkopf 48 wieder zu befreien.

In axialer Richtung gesehen mittig zwischen den Beinen 60 weist der Fixierkopf 48 einen in radialer Richtung ausund einfahrbaren Arm 64 auf, der an seinem freien Ende eine nutförmige Ausnehmung 66 für die Aufnahme des Datenleitungskabels 32 aufweist. Weiter weist der Arm 64 in Längsrichtung der Ausnehmung 66 gesehen von dieser entfernt, eine Düse 68 auf, mittels welcher schnell härtender Klebstoff als Befestigungsmittel 38 zum Fixieren des Datenleitungskabels 32 an der Innenwand 28 ausbringbar ist.

Schlussendlich weist der Fixierkopf 48 eine Fernsehkamera 70 auf, welche um eine rechtwinklig zur Längsachse verlaufende Drehachse in derselben Axialebene schwenkbar ist, in welcher sich der Arm 64 befindet. Die Fernsehkamera 70 gibt ihre Signale über eine durch die flexible Welle 54 verlaufende Leitung an eine Beobachtungs- und Steuereinheit ausserhalb des Nebenrohres 12 weiter.

Auch die Feststelleinheit 52 weist zweimal drei Beine 72 bzw. 72' auf, die in gleicher Art und Weise wie die Beine 60 des Fixierkopfes 48 angeordnet sind. Die in einer Ebene liegende Beine 72 weisen an ihren freien Enden ebenfalls Kugelrollen 62 auf. Die der anderen Ebene zugeordneten Beine 72' sind an ihrem freien Ende mit einem Haftbelag 74 versehen. Diese Beine 72' sind dazu bestimmt, in ausgefahrenem Zustand die Feststelleinheit 52 im Nebenrohr 12 ortsfest zu halten. Zum Bewegen des Rohrleitungsroboters 46 werden diese in radialer Richtung gegen aussen federnd vorgespannten Beine 72' mittels einer Stahlseite 56 zurückgezogen. Mittels der Beine 72 und 72' ist die Feststelleinheit 52 im Nebenrohr 12 zentrisch fixierbar. Weiter weist die Feststelleinheit 52 eine festmontierte Fernsehkamera 70' auf, um die flexible Welle 54 und den diesseitigen Bereich des Nebenrohres 12 einsehen zu können.

Entweder der Fixierkopf 48 oder die Feststelleinheit 52 weisen einen Drehantrieb und/oder einen Translationsantrieb auf, um den Fixierkopf 48 bezüglich der Feststelleinheit 52 einerseits in Umfangsrichtung und andererseits in Längsrichtung zum Verlegen und Befestigen des Datenleitungskabels 32 bewegen zu können.

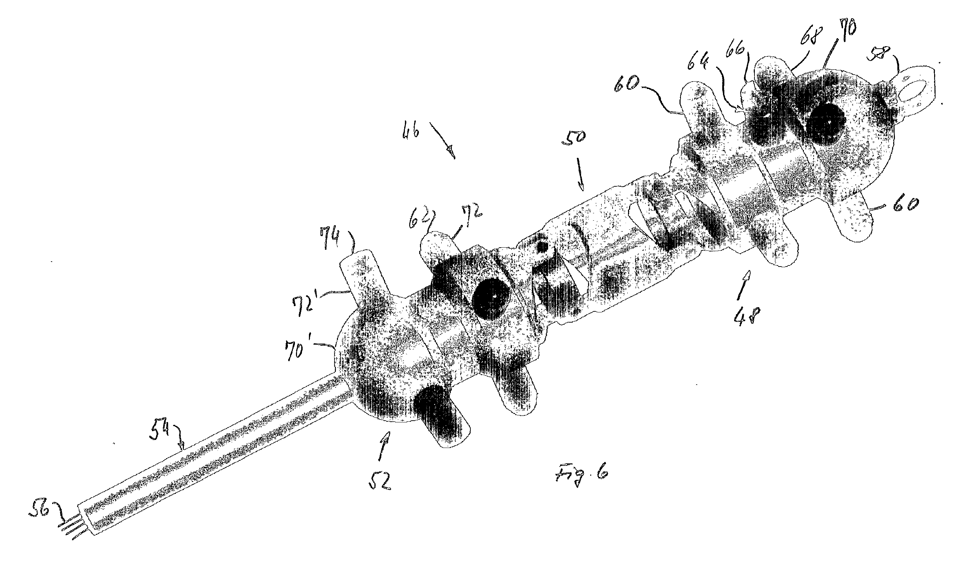

Fig. 7 offenbart eine weitere Möglichkeit zum Fixieren des Datenleitungskabels 32 im Nebenrohr 12. Von einem kugelförmigen Körper 76 stehen in radialer Richtung drei federnd ausgebildete Stützbeine 78 ab, die in einer Ebene angeordnet und in Umfangsrichtung gleichmässig verteilt sind. An den freien Enden der Stützbeine 78 ist je eine Walze 80 frei drehbar gelagert, wobei die Drehachsen der Walzen 80 in der Ebene liegen. Die eine dieser Walzen 80 weist mittig eine umlaufende Führungsnut 82 auf. Im Innern des Körpers 76 befindet sich ein Klebbandvorrat, von welchem das Klebband 84 durch das betreffende Stützbein 78 hindurch um die Walze 80 mit der Führungsnut 82 geführt ist. Durch Ziehen des Körpers 76 in Zugrichtung Z wird das durch die Führungsnut 82 hindurchverlaufende Datenleitungskabel 32 mittels des Klebbandes 84 an der Innenwand 28 des Nebenrohres 12 befestigt. Zum Aufbringen der Zugkraft kann eine flexible Welle verwendet werden, die das Drehen der Kugel um die Längsachse des Nebenrohres 12 während der Längsbewegung erlaubt. Es ist auch denkbar, die Achsen der Walzen 80 bezüglich der Ebene, in welcher die Stützbeine 78 angeordnet sind, schräg zu stellen, um selbsttätig eine Drehbewegung der Kugel beim Vorwärtsbewegen im Nebenrohr 12 zu erzielen.

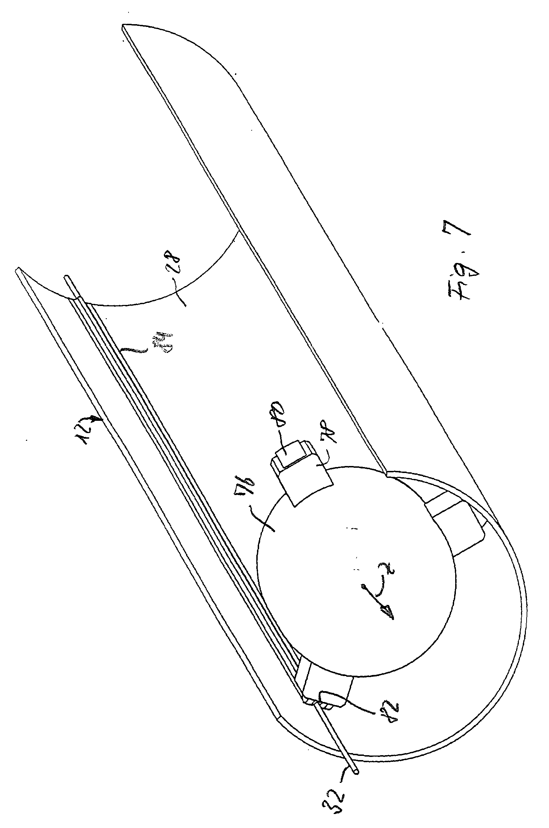

Bei der in den Fig. 8 bis 10 gezeigten Variante, wird das Datenleitungskabel 32 im Nebenrohr 12 mittels selbstfedernden Briden 86 fixiert. Die Briden 86 sind in bestimmtem Abstand hintereinander am Datenleitungskabel 32 befestigt. Im gezeigten Beispiel ist das eine Ende des aus Federstahl bestehenden Bridenbandes 86' zu einer Befestigungsöse 88 umgebogen, durch welche hindurch das Datenleitungskabel 32 verläuft. Das Bridenband 86' weist am der Befestigungsöse 88 abgewandten Ende eine vorstehende Zunge 90 auf, die eine Öffnung 92 im Bridenband 86' durchgreift und dort mittels eines Fixierdrahtes 94 (Fig. 8 und 9), das zu einem Ring geschlossene Bridenband zusammenhält. Wie dies aus der Fig. 9 hervorgeht, ist in diesem Zustand der Durchmesser der Bride 86 wesentlich kleiner als der lichte, innere Durchmesser des Nebenrohres 12. Das im betreffenden Abschnitt mit Briden 86 versehene Datenleitungskabel 32 wird von der Hausanschlussseite her in das Nebenrohr 12 eingezogen. Durch Entfernen des Fixierdrahtes 94 weitet sich die Bride 86 selbsttätig auf, bis sie an der Innenwand 28 anliegt, wie dies den Fig. 9 und 10 entnehmbar ist. Sind die Briden 86 in einer bestimmten Drehlage anzuordnen, können sie beispielsweise mittels eines Rohrroboters entsprechend plaziert werden.

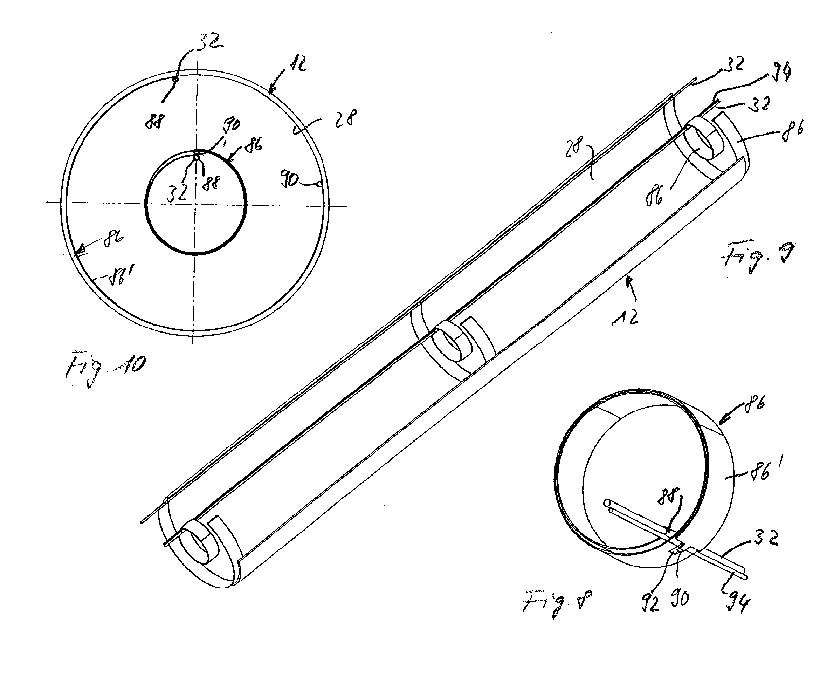

Eine weitere Möglichkeit zum Verlegen des Datenleitungskabels im Hauptrohr 10 oder Nebenrohr 12 ist in den Fig. 11 bis 13 angedeutet. Gemäss Fig. 11 ist auf ein Trägerband 96 oder einen Liner ein profilförmiges Kanalelement 98 aufgesetzt, das mittels Befestigungsvorsprüngen 100 im Trägerband 96 bzw. Liner fixiert ist. Beim Liner sowie beim Trägerband 96 handelt es sich um ein mit Harz getränktes Gewebe oder Vlies, das zum Aushärten bzw. Ankleben an die Rohrinnenwand angedrückt wird, bis das Harz wenigstens teilausgehärtet ist. Die Befestigungsvorsprünge 100 stehen von einem Basisteil 101 ab, von dem auf der gegenüberliegenden Seite elastisch verformbare Schliesslippen 102 abstehen, die im Ruhezustand einen rohrförmigen Hohlraum 104 abschliessen. In diesem ist das Datenleitungskabel 32 eingelegt.

Fig. 12 zeigt zwei unterschiedliche Ausbildungsformen von ebenfalls profilförmigen Kanalelementen 98, die im Trägerband 96 bzw. Inliner angeordnet sind, wobei auf den einander gegenüberliegenden Seiten vom Basisteil 101 die Befestigungsvorsprünge 100 seitlich abstehen. Das in der Fig. 12 links gezeigte Kanalelement 98 weist eine einzige elastische Schliesslippe 102 auf, die zusammen mit einer im Trägerband 96 angeordneten Lippe den rohrförmigen Hohlraum 104 umschliesst. 32 ist das Datenleitungskabel.

Das in der Fig. 12 rechts gezeigte Kanalelement 98 ist symmetrisch ausgebildet und weist in ähnlicher Art und Weise wie die Ausbildungsform von Fig. 11 zwei elastisch biegbare Schliesslippen 102 auf, die in Ruhestellung den rohrförmigen Hohlraum 104 umschliessen, in welchem das Datenleitungskabel 32 angeordnet ist.

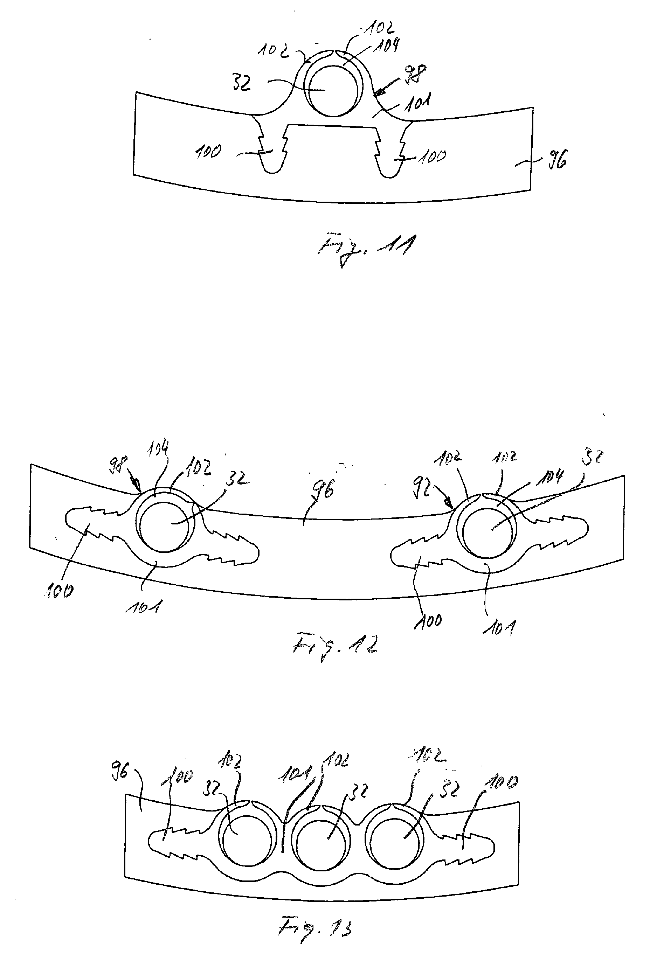

Fig. 13 zeigt eine der Fig. 12 rechts sehr ähnliche Ausbildungsform des Kanalelements 98, wobei nun in diesem drei nebeneinander liegende rohrförmige Hohlräume 104 ausgebildet sind. Im gezeigten Beispiel befindet sich in jedem der Hohlräume 104 eine Datenleitung 32.

In einem Liner oder einem entsprechend breiten Trägerband 96 können eine Mehrzahl von wenigstens annähernd in Längsrichtung verlaufenden Kanalelementen angeordnet sein. In bevorzugter Weise sind schräg dazu verlaufende, die genannten Kanalelemente kreuzende Kanalelemente vorhanden, so dass die Kabel zu den Abzweigungen in den Kanalelementen 98 geführt werden können, ohne beim Einbringen des Liners oder Trägerbandes 96 auf die Drehlage geachtet werden muss.

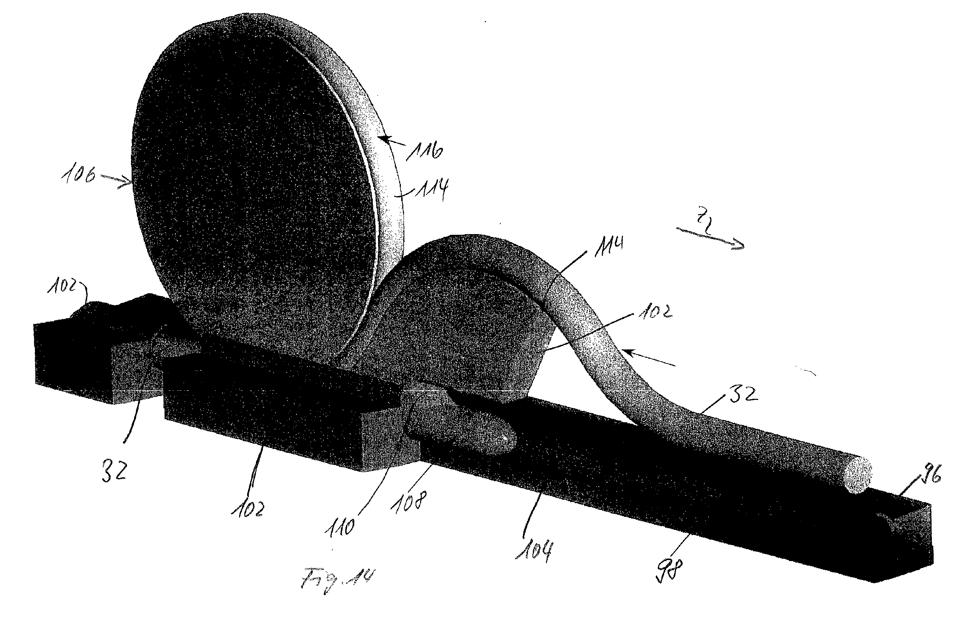

Eine mögliche Ausbildungsform einer Vorrichtung zum Einlegen der in das Hauptrohr 10 oder Nebenrohr 12 eingezogenen Datenleitungskabel 32 in ein Kanalelement 98 gemäss den Fig. 11 bis 13 ist in der Fig. 14 gezeigt. Diese Vorrichtung 106 weist ein kreiszylinderförmiges Führungselement 108 auf, dessen Durchmesser etwas kleiner ist als der Durchmessser des Hohlraumes 104 im Kanalelement 98.

Das in Zugrichtung Z gesehen vorlaufende Ende des Führungselements 108 ist verjüngend abgerundet ausgebildet. Gegenüber dem vorauslaufenden Ende zurückversetzt steht vom Führungselement 108 ein keilförmiges Spreizelement 110 ab, das dazu bestimmt ist, die Schliesslippen 102 von der Ruhestellung in eine Offenstellung zu bewegen, wenn die Vorrichtung 106 in Zugrichtung Z mit dem im rohrförmigen Hohlraum 104 verschiebbar gelagerten Führungselement 108 bewegt wird. Am Spreizelement 110 ist im Abstand zum Führungselement 108 ein annähernd halbtropfenförmiges Leitelement 112 befestigt, das auf seiner, dem Spreizelement 110 abgewandten Mantelseite mit einer Führungsnut 114 für das Datenleitungskabel 32 versehen ist. Weiter weist die Vorrichtung 106 eine um seine, rechtwinklig zur Zugrichtung Z verlaufende Achse frei drehbar gelagerte Leitscheibe 116 mit einer umlaufenden weiteren Führungsnut 114' auf. Diese weitere Führungsnut 114' bildet zusammen mit der Führungsnut 114 einen Führungsspalt für das Datenleitungskabel 32, um dieses in den geöffneten Hohlraum 104 einzuführen.

Fig. 15 zeigt einen Abschnitt der Innenbride 16 mit drei Clips 18 und den von diesen gehaltenen Röhrchen 20. An einem rohrgängigen Roboterfahrzeug 118 ist ein Schneidwerkzeug 120 angeordnet, mittels welchem aus einem der Röhrchen 20 ein Abschnitt herausgeschnitten werden kann. Das Schneidwerkzeug 120 weist ein, zwei in Längsrichtung des Hauptrohres 10 beabstandete Zentrierarme 122 aufweisendes Zentrierwerkzeug auf, das in radialer Richtung ein- und ausfahrbar ist. Die Zentrierarme 122 weisen am freien Ende eine nutartige Zentrierausnehmung 124 auf, mittels welcher sie, beim Ausfahren in radialer Richtung (in der richtigen Drehlage des Schneidwerkzeugs 120) das Röhrchen 20 umfassen. Weiter weist das Schneidwerkzeug 120, in axialer Richtung ausserhalb der Zentrierarme 122, je einen Schneidarm 126 auf, an dessen freiem Ende eine antreibbare Schneidscheibe 128 um eine in axialer Richtung verlaufende Drehachse gelagert ist. Schneidarme 128 sind gleichzeitig mit oder nach den Zentrierarmen 122 ausfahrbar, wobei sie derart verschwenkt sind, dass die Schneidscheiben das Röhrchen 20 nicht berühren. Nach dem Zentrieren des Schneidwerkzeugs 120 mittels der Zentrierarme 122 werden die Schneidscheiben angetrieben und werden die Schneidarme um einen bestimmten Winkel α auf die Zentrierarme 122 zu bewegt. Dabei wird das Röhrchen 20 an zwei

Stellen durchschnitten. Der Winkel α ist derart gewählt, dass das benachbarte Röhrchen 20 nicht verletzt wird. Der weggeschnittene Abschnitt wird von den Zentrierarmen 122 gehalten beim Einfahren derselben mitgenommen.

Selbstverständlich könnte auch ein andersartiges Schneidoder Fräswerkzeug verwendet werden.

Der Vollständigkeit halber sei erwähnt, dass die in den Fig. 7 bis 10 gezeigten Vorrichtungen und entsprechenden Verfahren auch zum Verlegen von Datenleitungskabeln 32 in Hauptrohren 10 verwendet werden können.

Selbstverständlich sind auch zum Rohrleitungsroboter 46 gemäss den Fig. 5 und 6 unterschiedlich ausgebildete Roboter zum Verlegen und Befestigen von Datenleitungskabeln 32 in der beschriebenen und gezeigten Art verwendbar.

Es sei erwähnt, dass das Nebenrohr 12 in einem beliebigen Winkel in das Hauptrohr 10 münden kann.

Es ist auch denkbar, aus dem Röhrchen 20, anstelle eines Abschnitts nur ein Durchlass für das dem Nebenrohr 12 zuzuführende Datenleitungskabel 32 herauszutrennen, beispielsweise mittels eines am Roboterfahrzeug angeordneten Fräswerkzeugs. Dabei verbleibt ein die beiden Röhrchenteile miteinander verbindender Steg, der Zugkräfte im Röhrchen aufnehmen kann.

## Patentansprüche

1. Verfahren zum Verlegen von Datenleitungskabeln, insbesondere Lichtwellenleiterkabeln, in Rohrleitungssystemen, insbesondere Abwasserrohrleitungssystemen, mit einem Hauptrohr (10) und einem von diesem abzweigenden Nebenrohr (12), bei dem das Datenleitungskabel (32) entlang der Rohrinnenwand (22) des Hauptrohrs (10) wenigstens annähernd tangential zur Verbindungskante (30) zwischen dem Hauptrohr (10) und dem Nebenrohr (12) an die Verbindungskante (30) heran geführt und entlang der Innenwand (28) des Nebenrohres (12), wenigstens in einem an die Verbindungskante (30) anschliessenden Endbereich (12') des Nebenrohres (12), schraubenlinienförmig geführt wird.

2. Verfahren nach Anspruch 1, **dadurch gekennzeichnet, dass** das Datenleitungskabel (32), in einem Übergangsbereich (40) zwischen Hauptrohr (10) und Nebenrohr (12), entlang eines Abschnitts (30') der Verbindungskante (30) um diese herum geführt wird.

3. Verfahren nach Anspruch 1 oder 2, **dadurch gekennzeichnet, dass** das Datenleitungskabel (32) im Hauptrohr (10) wenigstens annähernd geradlinig auf die Verbindungskante (30) zu geführt wird.

4. Verfahren nach einem der Ansprüche 1 bis 3, **dadurch gekennzeichnet, dass** das Datenleitungskabel (30) wenigstens annähernd in Längsrichtung des Hauptrohres (10) an den höchstgelegenen Abschnitt der Verbindungskante (30) heran geführt wird.

5. Verfahren nach einem der Ansprüche 1 bis 4, **dadurch gekennzeichnet, dass** im Hauptrohr (10) für die Aufnahme der Datenleitungskabel (32) bestimmte Röhrchen (20) verlegt werden, aus dem für die Aufnahme des der Nebenleitung (12) zugeordneten Datenleitungskabels (32) bestimmten Röhrchens (20), bei der Abzweigung des Nebenrohres (12), ein Abschnitt ausgeschnitten und die dadurch entstandene Röhrchenlücke (34), nach dem Einzug des Datenleitungskabels (32), mittels eines Abdeckelements (42) überdeckt wird.

6. Verfahren nach einem der Ansprüche 1 bis 5, **dadurch gekennzeichnet, dass** im Nebenrohr (12) das Datenleitungskabel (32) mittels eines Rohrleitungsroboters (46) an der Innenwand (28) befestigt wird.

7. Verfahren nach einem der Ansprüche 1 bis 5, **dadurch gekennzeichnet, dass** im Nebenrohr (12) das Datenleitungskabel (32) mittels selbstfedernden Briden (86) befestigt wird, die im Abstand am Datenleitungskabel (32) angeordnet und zum Einführen in das Nebenohr (12) zu einem geschlossenen Ring, mit einem kleineren Aussendurchmesser als der lichte Querschnitt des Nebenrohres (12), geformt sind, wobei sich die Briden (86), nach dem Lösen einer Verriegelung (94) selbständig aufweiten und an die Innenwand (28) des Nebenrohres (12) anlegen.

8. Verfahren nach einem der Ansprüche 1 bis 7, **dadurch gekennzeichnet, dass** nach dem Verlegen des Datenleitungskabels (32) im Nebenrohr (12) in dieses ein Liner (36) eingebracht wird, der im ausgehärteten Zustand das Datenleitungskabel (32) zwischen sich und dem Nebenrohr (12) einschliesst.

9. Verfahren nach einem der Ansprüche 1 bis 4, **dadurch gekennzeichnet, dass** im Hauptrohr (10) oder im Nebenrohr (12) ein für die Aufnahme des Datenleitungskabels (32) bestimmter, in einen Liner (36) oder ein Trägerband (96) integrierter oder an diesem befestigter Kanal (98) mit elastisch verformbarer Schliesslippe (102) verlegt wird, und zum Einführen des Datenleitungskabels (32) in den Kanal (98) eine Kanalöffnungs- und Kabeleinführeinrichtung (106) verwendet wird.

10. Rohrleitungsroboter zur Durchführung des Verfahrens nach Anspruch 6, **gekennzeichnet durch** ein, vorzugsweise nutenartiges Führungsmittel (66) für das Datenleitungskabel (32,82) und Mittel (68,80) zum Anbringen eines Befestigungsmittels (38) am Nebenrohr.

11. Abdeckelement zur Durchführung des Verfahrens nach Anspruch 5, **gekennzeichnet durch** einen U-förmigen Querschnitt und in Richtung gegen den vom Abdeckelement (42) begrenzten Innenraum umgebogenen Endlappen (44), die dazu bestimmt sind, sich mit ihrem freien Ende (44'), im montierten Zustand, am Röhrchen (20) an dessen an die Röhrchenlücke (34) anschliessenden Endabschnitten abzustützen.
